# EUROPEAN PATENT SPECIFICATION

(11) **EP 1 648 011 B1**
(45) Date of publication and mention of the grant of the patent: **24.02.2010**
(21) Application number: 05254746.0
(22) Date of filing: 28.07.2005
(51) Int. Cl.: H01H 61/00, H01H 37/54

(54) **Motor overload protector**
Überlastschutz eines Motors
Limiteur de surcharge d'un moteur

(30) Priority: 12.10.2004 US 618083 P
(43) Date of publication of application: 19.04.2006
(73) Proprietor: Sensata Technologies Massachusetts, Inc., Attleboro MA 02703 (US)
(72) Inventor: Lim, Adrian W., North Attleboro Massachusetts 02760 (US); Brodeur, Russell P., Rehoboth Massachusetts 02769 (US)
(74) Representative: Legg, Cyrus James Grahame

(56) References cited:
- EP-A2- 0 773 560
- EP-A2- 0 890 967
- GB-A- 1 567 567
- US-A- 3 579 167
- US-A- 4 706 152

## Description

### Field of the Invention

This invention relates generally to motor protectors and more particularly to electrical enclosed break devices.

### Background of the Invention

U.S. Patent No. 4,706,152, assigned to Texas Instruments Incorporated, relates to an enclosed break device known as the 4TM and the 5TM. An enclosed break device, according to the International Electrotechnical Commission (IEC) Standard 60079-15 second edition 2001-02, is a "device incorporating electrical contacts that are made and broken and that will withstand an internal explosion of the flammable gas or vapor which may enter it without suffering damage and without communicating the internal explosion to the external flammable gas or vapor." The 4TM and 5TM devices which have been made in accordance with the referenced patent comply with the first edition of the IEC standard 60079-15 which requires that enclosed break devices pass a make-and-break test 3 times without communicating an internal explosion to external flammable gas or vapor. However, such devices may not meet the requirement of the second edition IEC Standard 60079-15, which requires that an enclosed break device pass a make-and-break test 10 times.

### Summary of the Invention

It is an object of the present invention to provide a 4TM/5TM type device that complies with the second edition (2001-02) IEC Standard 60079-15.

Another object of the invention is the provision of an internal break device that can be subjected to a make-and-break test ten times without communicating an internal explosion to external flammable gas or vapor.

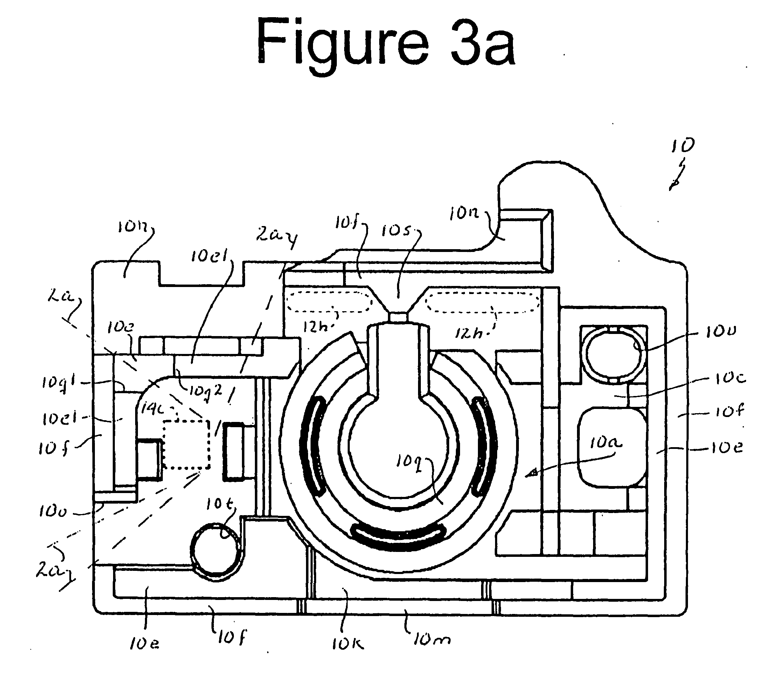

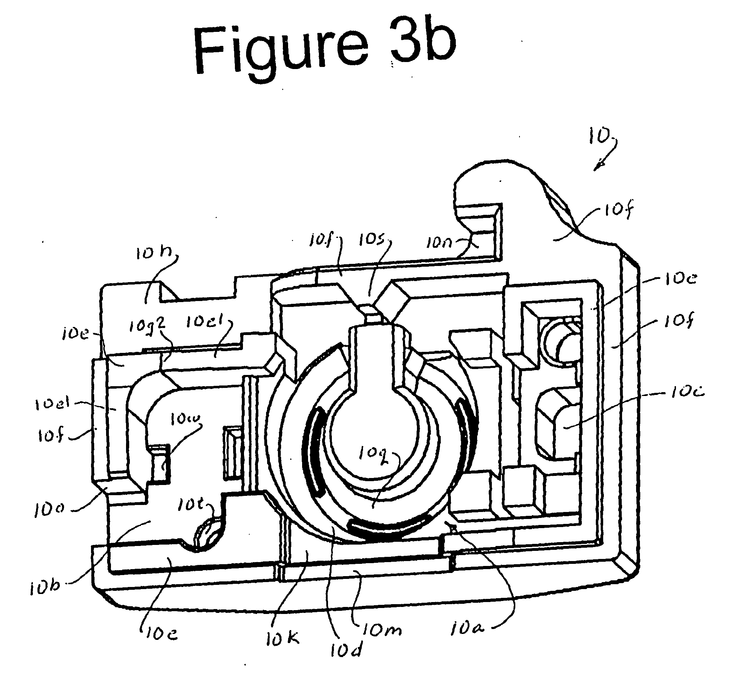

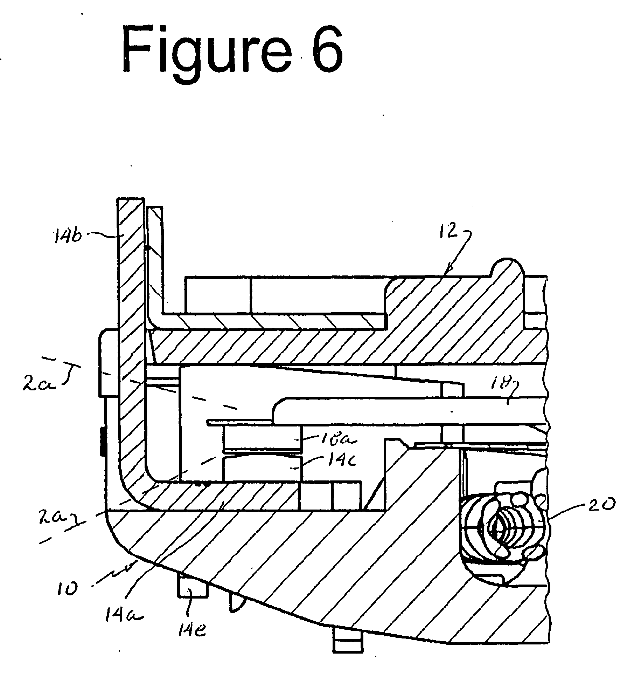

A conventional 4TM/5TM type device comprises a base of electrically insulative material in which an elongated recess is formed. A first terminal is mounted at a first end and provided with a contact mounting portion disposed within the recess with a stationary contact mounted thereon. An elongated movable contact arm has a first end fixedly mounted on a mounting portion connected to another terminal. A movable contact is mounted on a free end of the movable contact arm and is arranged to move into and out of engagement with the stationary contact. A well is formed intermediate to the ends of the elongated recess and a heater is disposed therein in heat transfer relation to a thermostatic disc seated in the base over the well. The disc is adapted to snap from one dished configuration to an opposite dished configuration upon being heated to a preselected temperature. When the disc snaps it transfers motion to the movable contact arm causing the movable contact to move out of engagement with the stationary contact thereby interrupting the circuit path therethrough. A cover of electrically insulative material is received on the base to enclose the switch mechanism. However, there are two paths leading from the electrical contacts to openings at locations between the cover and base where the cover side wall is not interdigitated with the base, or closed, with a notched seating ledge of the base or comparable blocking protrusions of the cover. These locations allow flammable gas outside the protector housing to enter into the housing and enable internal arcing to ignite the flammable gas outside the device. The first path is shown by lines 2a of Figs. 3 and 6 which extend directly from the contacts through slots/openings between the first terminal blade portion and the side walls of the slots/openings of the base and the cover. The second path is shown by lines 2b (Fig. 3) which extends from the contacts over the wall at the back portion of the contact receiving end of the recess.

According to a preferred embodiment of the invention, the cover is modified as claimed in claims 1 and 2 by forming first and second multiple wall barriers to impede the travel of arcs from the make-and-break contacts. The first multiple wall barrier comprises spaced apart wall portions which are received on the mounting portion of the first terminal closely adjacent to the stationary and movable contacts. According to a feature of the invention, the wall portions form a generally triangular configuration with respect to a cross section taken parallel to the bottom wall of the base. This structure also serves to decrease the volume of space between the base and cover thereby minimizing the supply of fuel to an internal explosion. According to another modification of the cover a vertically extending notch is formed in the walls which interfit with a corner portion of a corresponding side wall of the base to further inhibit arc travel. The second multiple wall barrier comprises another set of spaced apart wall portions along the perimeter of the base at a side of the first end of the recess to limit travel of arcing from the contacts and to further decrease excess volume of space. In another preferred embodiment of the invention, the various openings formed in the housing of the device are sealed by epoxy to prevent propagation of any internal explosion from external flammable gas. The sealing can be utilized by itself or along with the cover modifications noted above.

### Brief Description of the Drawings

Other objects and features of the invention will become apparent by reference to the following detailed description of preferred embodiments when considered in connection with the accompanying drawings in which like reference characters refer to like components or structural features throughout the several views wherein:
Fig. 1 is a perspective view of a 4TM/5TM device taken from above the device;
Fig. 2 is a perspective view of the Fig. 1 device taken from the same position but with the device rotated half a turn upwardly into the paper as seen in Fig. 1;
Fig. 3a is a top plan view of the base of the device prior to the installation of components therein and Fig. 3b is a view similar to Fig. 3a shown at a slight angle relative to the position of Fig. 3a to better illustrate the relative heights of the various surfaces of the base;
Fig. 4 is a perspective view of the cover of the Fig. 1 device as it existed prior to the instant invention taken generally in the Fig. 2 orientation;
Fig. 5a is a top plan view of the Fig. 1 device as it existed prior to the instant invention with the cover removed; Fig. 5b is the same as Fig. 5a but with the snap acting disc removed for purposes of illustration; and Fig. 5c is the same as Fig. 5a but with the disc and heater element removed for purposes of illustration;
Fig. 6 is a broken away cross section in the direction of a front elevational view of Figs. 5a-5c device taken through the make-and-break contacts;
Fig. 7 is a view similar to Fig. 4 of a cover made in accordance with a preferred embodiment of the invention;
Fig. 8 is a view similar to Fig. 5a but is shown with a cover in a horizontal cross section, the cover incorporating the preferred embodiment shown in Fig. 7;
Fig. 9 is a top plan view of a 4TM and 5TM device made in accordance with the preferred embodiment of Figs. 7 and 8;
Fig. 10 is an elevational cross section taken on line 10-10 of Fig. 9;
Fig. 11 is an elevational cross section taken on line 11-11 of Fig. 9;

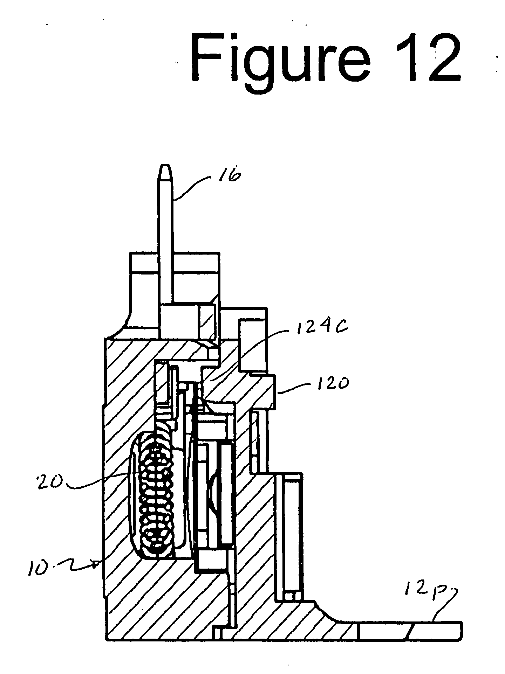

Fig. 12 is an elevational cross section taken on line 12-12 of Fig. 9;
Fig. 13 is a view similar to Fig. 8 but showing an alternative preferred embodiment of the invention;
Fig. 14 is a perspective view, similar to Fig. 1 of a device made in accordance with the Fig. 13 preferred embodiment;
Fig. 15 is a perspective view, similar to Figs. 8 and 13 showing another alternative preferred embodiment of the invention; and
Fig. 16 is a view similar to Fig. 15 of a device made according to the Fig. 15 embodiment.

### Detailed Description of Preferred Embodiments

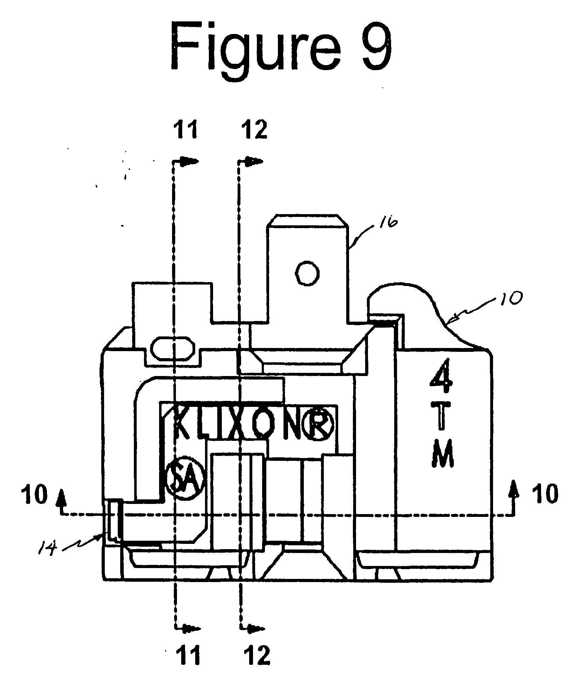

In the following description references made to top, bottom, side and the like relate to the orientation of the device as shown in Figs. 3, 5, 8, 9, 13 and 15.

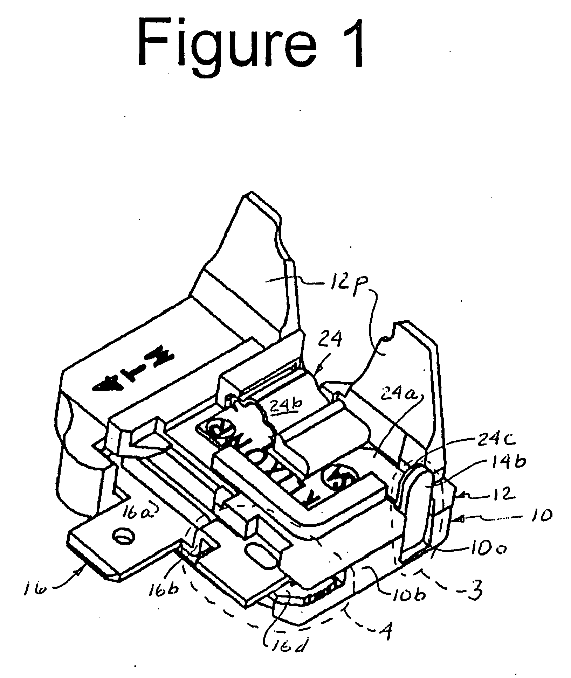

With reference to Figs. 1-5, the 4TM and 5TM devices referenced above comprise a housing having a generally rectangular base 10 having a major length along the front of the device and a minor length from front to back of the device. A recess 10a is formed in the base and a cover 12 is received thereon closing the recess. First and second guide pin holes 10t, 10u are formed in the bottom wall for reception of cover guide pins 12d, 12e, respectively, to be discussed. With particular reference to Fig.3, recess 10a is generally elongated in the direction of the major length having a contact receiving end 10b, an opposite movable contact arm mounting end 10c and a central heater receiving portion 10d intermediate to the two ends. Contact receiving end 10b of the recess is defined by side wall portions 10e on the front, and 10e and 10el tapered downwardly from line 10gl on the left side of the base as seen in Fig. 3 with an offset lower seating ledge 10f contiguous with these portions on the front and left sides. The back side of the contact receiving end of the recess is defined by wall portion 10e with a downward tapered portion extending from line 10g on to the right extreme of that wall portion as viewed in Fig. 3. As will be discussed below, there is no seating ledge along the back portion of the contact receiving end of the recess. Outboard of the back side of the contact receiving end of the recess defining wall is a downwardly spaced terminal receiving ledge 10h. Central heater receiving portion 10d is defined on the front by a downwardly offset portion 10k along with an outer downwardly further offset ledge 10m and on the back side by wall portion 10f. Outboard of wall portion 10f defining the central heater receiving portion 10d of the recess is another terminal receiving ledge 10n offset further downwardly than terminal receiving ledge 10h, i.e., ledge 10n is closer to the bottom wall of the base than is ledge 10h. The movable contact arm mounting end 10c of the recess is defined by side wall 10e with outer wall portion 10f serving as a seating ledge.

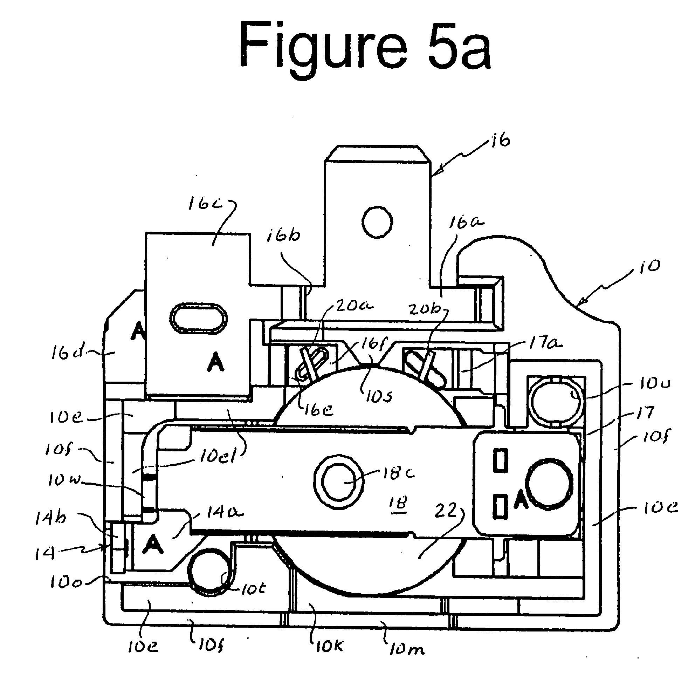

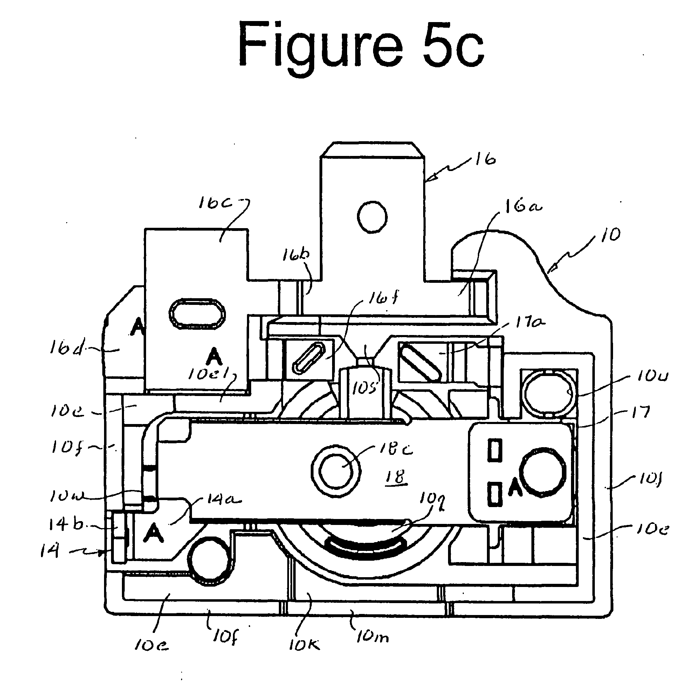

With particular reference to Figs. 3 and 5a, a slot 10o is formed in side wall 10e defining the left side of contact receiving end 10b of the recess for reception of a first terminal 14 to be discussed. A second terminal 16 has a base portion 16a received on ledge 10n and has a transversely extending step portion 16b extending up to a higher level to a body portion 16c. A separate electrically conductive terminal strip 16d is received on terminal receiving ledge 10h and is provided with a transversely extending step portion 16e extending down to the bottom of the central heater receiving recess portion in a space 10r between wall portion 10f defining the back of the central heater receiving portion of the recess and the central heater receiving portion of the recess 10d with the end 16f of strip portion 16d serving as a connection location for one end 20a of a heater 20, to be discussed, disposed in an annular well 10q in the recess. The body portion 16c of the second terminal 16 is fixedly and electrically connected to terminal strip 16d on ledge portion 10h, as by welding.

First terminal 14 has a first, generally flat mounting portion 14a disposed at the contact receiving end 10b of recess 10a, an arm 14d which projects downwardly through an opening 10w in the bottom wall of the base and formed with a pair of clamping fingers 14e which are spread apart after being received through opening 10w to secure the mounting portion. First terminal 14 has a second portion 14b that includes an interconnection blade portion extending out of an opening in the side wall of the housing.

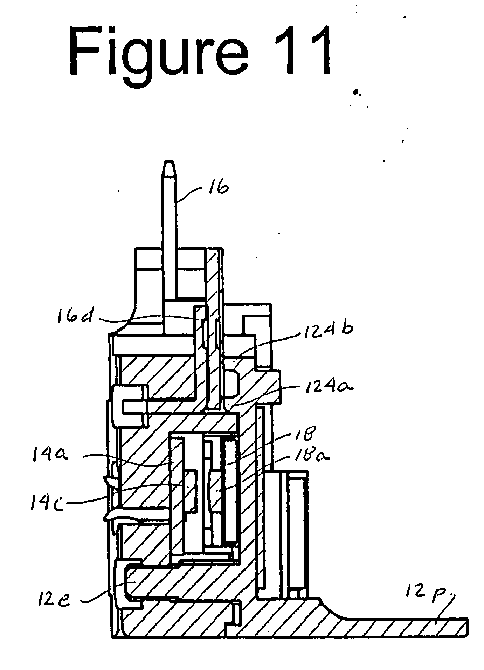

An electrically conductive movable contact arm mounting platform 17, see Figs. 5a and 11, received in movable contact arm mounting end 10c of recess 10a, is provided with an arm that steps down to an end portion 17a at a location in annular well 10q on the opposite side of a vertically extending rib 10s of wall 10f from end 16f of strip portion 16d. End portion 17a of the arm of platform 17 serves as a connection point for the second end 20b of heater 20. Platform 17 is fixedly and electrically connected to an end 18b of an elongated movable contact arm 18 which extends in the direction of the major length of recess 10a. A movable contact 18a is mounted on the bottom surface of movable contact arm 18 at its free end and is arranged to move into and out of electrical engagement with a stationary contact 14c mounted on mounting portion 14a of the first terminal.

A third pin receiving terminal 24 (Fig. 1) has a body portion 24a received on the top surface of cover 12 with pin receiving portion 24b aligned with the space between ears 12p of the cover. Terminal 24 has an arm 24c which extends over to the blade portion 14b of first terminal 14 and is electrically connected thereto, as by welding.

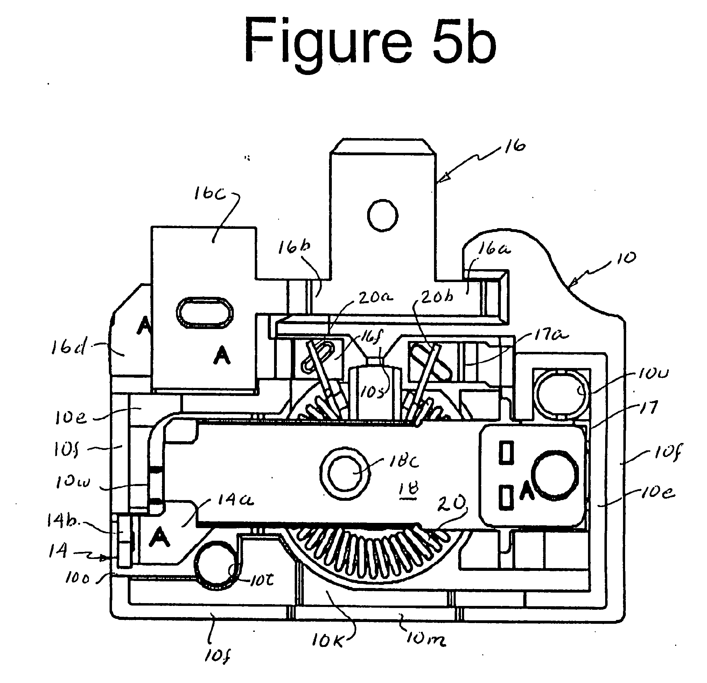

As noted above, heater 20 (see Fig. 5b) is disposed in well 10q of central heater receiving portion 10d of recess 10a and a thermostatic, snap acting disc 22 (see Fig. 5a) is received on a disc seat formed in that portion of recess 10d so that the disc is above the heater in heat transfer relation therewith. Disc 22 is arranged so that at normal ambient temperature the disc is in a first dished shape configuration out of engagement with movable contact arm 18 however, upon reaching a predetermined actuation temperature, the disc snaps to a second, opposite dished configuration engaging dimple 18c of movable contact arm 18 and moves the movable contact 18a out of engagement with stationary contact 14c thereby opening the electrical path between terminals 16 and 18.

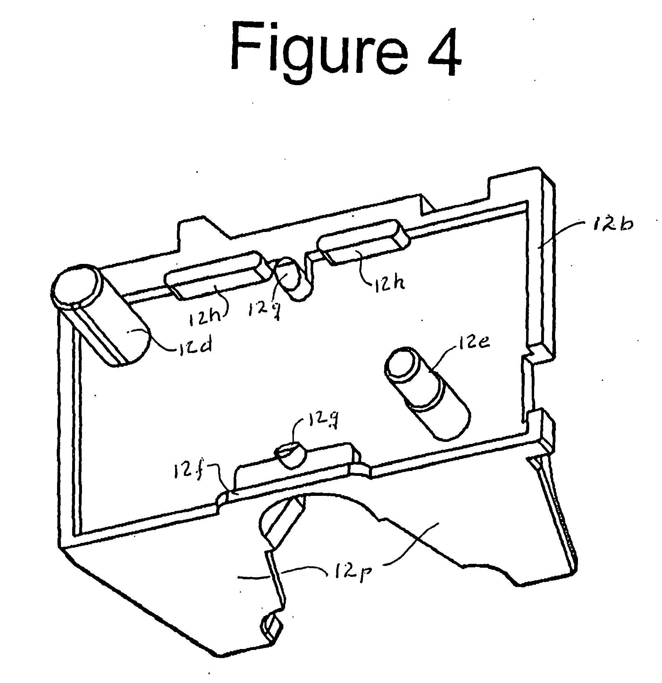

Cover 12, shown best in Fig. 4 and shown inverted relative to Fig. 1, is formed with a recess closing wall 12a and side walls 12b formed generally around the outer perimeter of recess closing wall 12a and extend orthogonally therefrom side walls 12b are alignable with seating ledge portion 10f of side walls 10e of base 10. A slot or opening 12c formed in side wall 12b, extends into recess closing wall 12a and is alignable with slot or-opening 10o in the base, to provide access for blade portion 14b of terminal 14. First and second alignment posts 12d, 12e, respectively, extend orthogonally from recess closing wall 12a and are adapted to be received in matching bores 10t, 10u, respectively, in base 10. Side wall 12b is extended in height at central front portion 12f and is adapted to be received on seating ledge 10m of the base, i.e., extending beyond wall portion 10k to provide an interdigitated or closed fit with wall portion 12f received in a step between wall portion 10k and 10m. Also shown in Fig. 4 are first and second disc retaining pins 12g disposed at opposed locations alignable with outer peripheral portions of the disc seat. First and second elongated blocks 12h are formed on wall 12a extending along the major wall length contiguous with side wall 12b on either side of one of the disc retaining pins and extending in height beyond side wall 12b.

Although protectors made as shown in Figs. 1-5 have performed extremely well and have been widely used in various industries, certain aspects of the devices need to be modified to ensure that the devices comply with recent changes in the requirements of the International Electrotechnical Commission Standard relating to "enclosed break devices" discussed above. With particular reference to Figs. 3, 5a-5c and 6, there are two paths leading from contacts 18a, 14c to openings at locations between the cover and the base where the cover side wall is not interdigitated with the base, or closed, with a notched seating ledge of the base, or the like. These locations allow flammable gas outside the protector housing to enter into the housing and enable internal arcing to ignite the flammable gas outside the device. The first path is shown by lines 2a (Figs. 3 and 6) which extend directly from the contacts through slots/openings 10o of the base and 12c of the cover between terminal blade portion 14b and the side walls of slots/openings 10o of base 10 and 12c of cover 12. The second path is shown by lines 2b (Fig. 3) which extends from the contacts over wall 10e and 10e1 at the back portion of contact portion end 10b of recess 10a and wall 10f of the central heater receiving recess 10d.

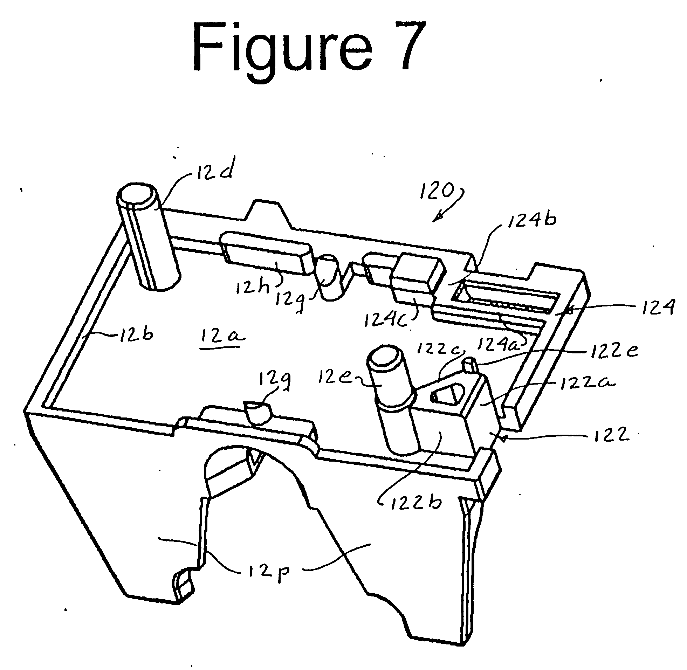

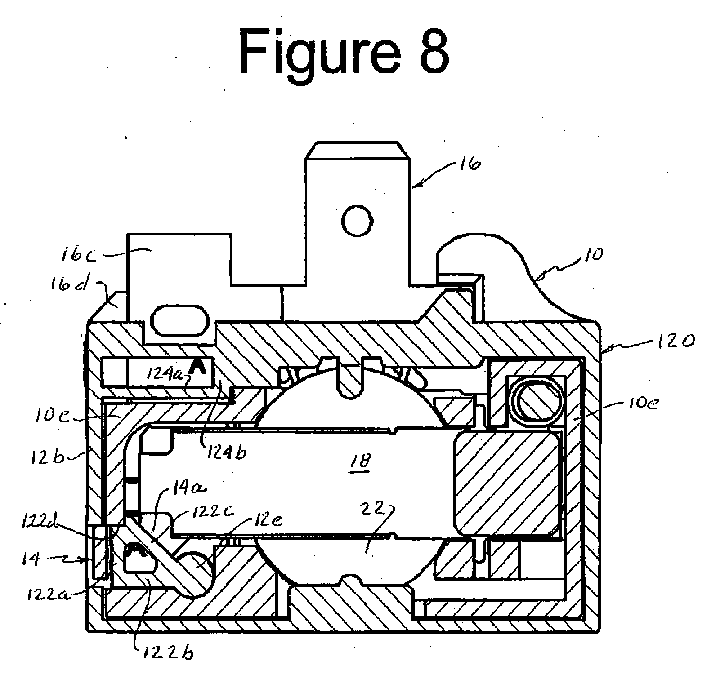

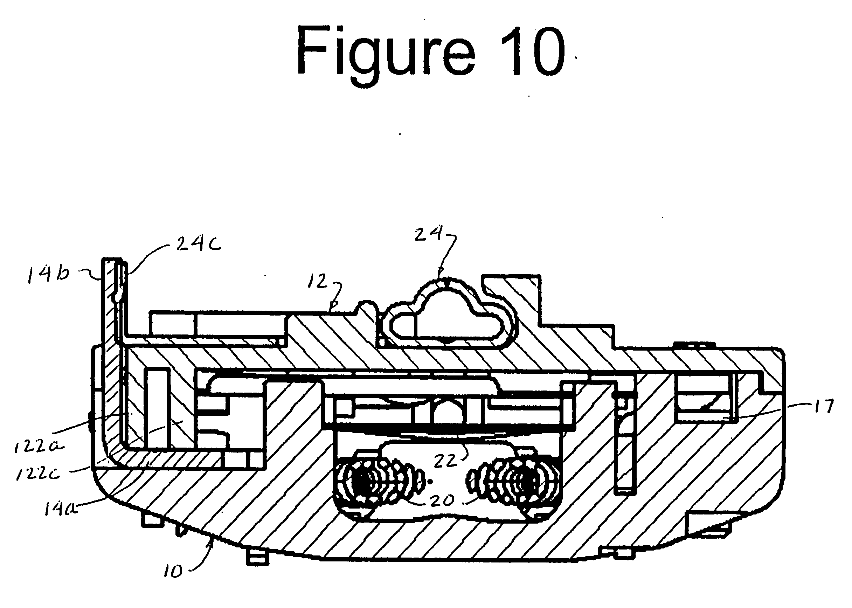

A modified cover 120 (see Fig. 7) made in accordance with a first feature of an other preferred embodiment of the invention comprises a first multiple wall barrier 122 extending from recess closing wall 12a comprising a first wall 122a orthogonally from wall 12a and disposed so that it is essentially flush with the inner surface of terminal receiving slot 10o and extends from the recess closing wall 12a generally to horizontally extending flat portion 14b of terminal 14 when the cover is received on the base (see Fig. 10). Extending generally normal to wall 122a at a side of slot 10o closest to ears 12p is a second wall 122b which extends over to guide pin 12e and then a third wall 122c extends between the extremity of wall 122a and post 12e generally forming a triangular barrier wall that extends normally from recess closing wall 12a that not only serves to interrupt arc travel but also reduces the volume of free space between the cover and the base, that is, it reduces the amount of fuel for supporting combustion. Preferably, a notch 122d (Fig. 8), extending in a normal direction to recess closing wall 12a is formed in walls 122a and 122c at their intersection that is adapted to receive the side wall 10e of the base to further impede arc travel. Preferably, a portion of wall barrier 122 along wall 122c that forms notch 122d is extended at 122e a distance essentially the same as the thickness of a mounting portion 14a of terminal 14. When the cover is in plan, this extension, or knob is received in a small open space next to mounting portion 14a extending toward opening 10t. This triangular feature essentially closes off the first path 2a of arc travel.

A second multiple wall barrier 124 is formed in the cover so that when placed on the base the barrier is at the first end of the housing adjacent to contacts 14c, 18a along the outer periphery. The second barrier adds wall 124a which extends normal to recess closing wall 12a and generally parallel to side wall 12b relative to the major length of the elongated base and spaced therefrom. Wall 124a extends away from recess closing wall 12a a distance essentially the same as outer wall 12b. Wall 124a at its extremity away from side wall 12b on the minor length end of the cover is joined to side wall 12b on the major length side by wall 124b of the same height. Contiguous to barrier 124 and extending along side wall 12b in the direction of its longitudinal axis, i.e., major length, is a block 124c, preferably formed of the same material as the cover, the block extending vertically a distance greater than that of side wall 12b. Block 124c serves as an arc barrier filling in the space 10r between wall portion 10e, 10e1 adjacent to stop 16e of conductive strip 16d defined by the back part of the contact receiving recess and wall portion 10f in back of the central heater receiving portion of the recess.

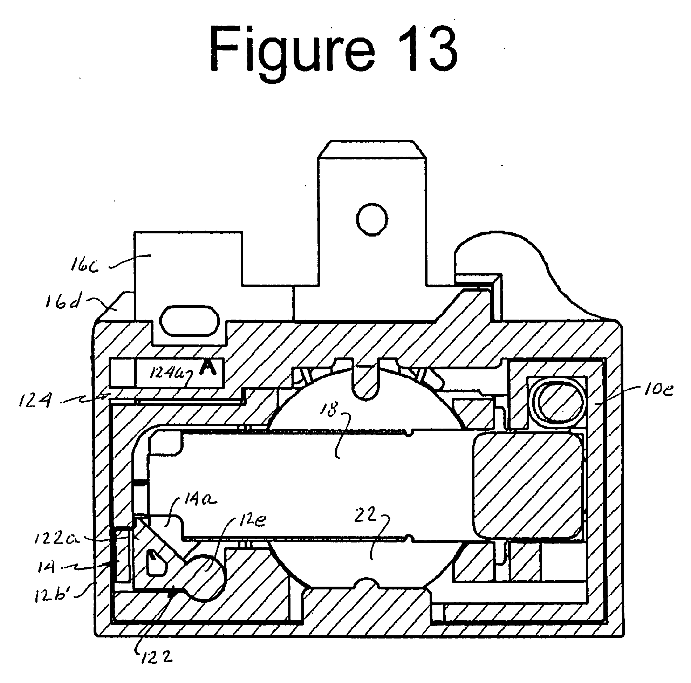

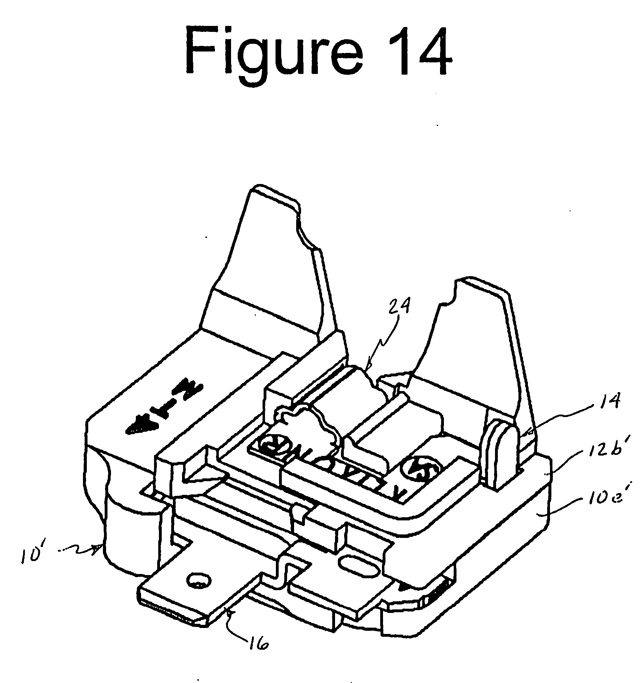

According to an alternative embodiment, terminal portion 14b can be moved inwardly away from the outer periphery of the housing as seen in Figs. 13 and 14 with side wall portions 10e' and 12b' being continuous, that is, without slot 10o and 12c being formed in the side walls with wall 122a of the first barrier 122 essentially butted up against side wall 10e just beyond slot 100. In this case, barrier 122, if desired, could be formed without notch 122d with barrier wall 122a butted up against sidewall 10e just beyond slot 10o.

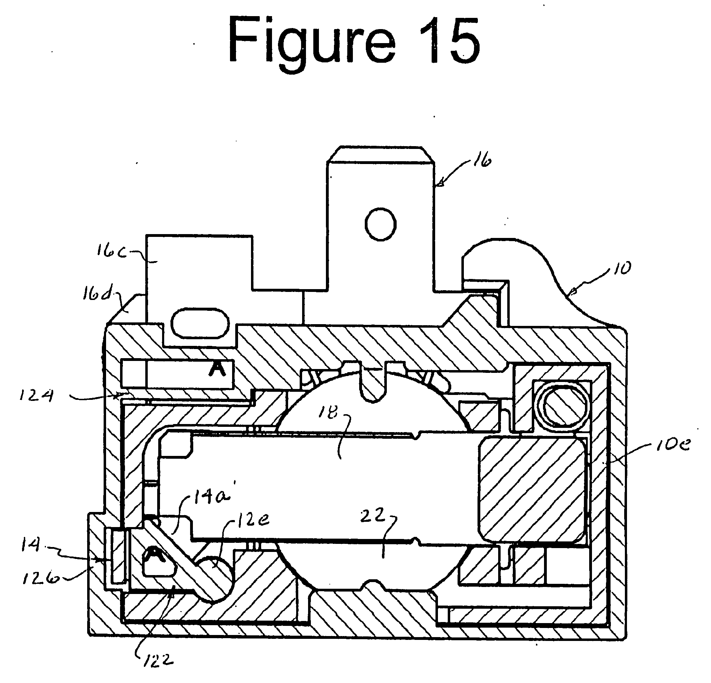

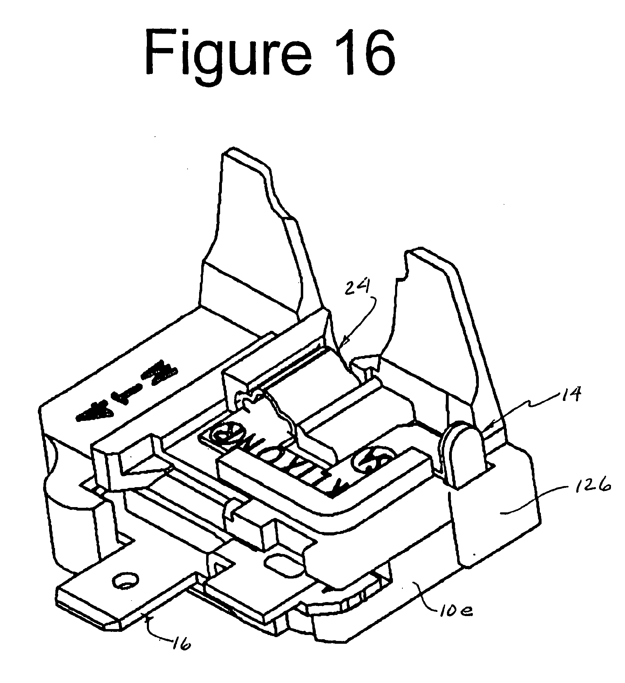

According to another alternative embodiment shown in Figs. 15 and 16, the Fig. 1 structure can be modified by forming side wall portion 126 to extend across slot 10o externally thereof. The location of terminal 14 can remain as shown in Fig. 8 with a side wall 126 covering the slot 10o, 12c in side walls 10e of the base and 12b of the cover, respectively.

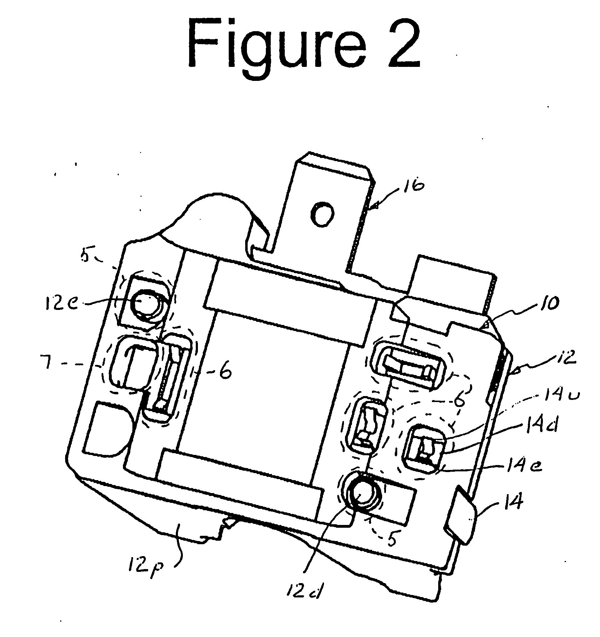

With reference to Figs. 1 and 2 a number of openings are formed through the housing for various purposes, comprising openings at dashed lined locations 3 and 4 for terminals 14 and 16, 5 for guide pins 12d, 12e and 6 for clamping elements in the base and 7 for providing access to the movable contact arm mounting portion. In accordance with another embodiment of the invention, each of these openings, once the device is assembled, can be sealed with suitable epoxy. This can be done along with the above embodiments or in place of them, as desired.

Although the invention has been described with regard to specific embodiments thereof, the invention is limited only by the appended claims.

## Claims

1. An enclosed protector comprising:
a base (10), a generally elongated recess (10a) formed in the base and defined by side walls of the base, the recess having opposed first (10b) and second (10c) ends,
a first terminal (14) extending through a slot (10a) formed through a side wall of the base at one opposed end, the first terminal having a generally flat contact mounting portion (14a) disposed within the recess,
a stationary contact (14c) mounted on the mounting portion of the first terminal,
an elongated movable contact arm (18) having first and second ends, a second terminal (16) having a mounting platform (17) at the second end (10c) of the recess,
the second end (18b) of the movable contact arm mounted on the mounting platform, a movable contact (18a) mounted on the first end of the movable contact arm and arranged to move into and out of engagement with the stationary contact,
a cover (120) received over the base, **characterized in that** the cover has a side wall having first (122) and second (124) multiple wall barriers in which the first barrier is aligned with a portion of the first terminal (14) and the second barrier includes spaced, parallely extending wall portions along the perimeter of the base at the first end of the recess, the first and second multiple wall barriers (122, 124) serving to limit travel of arcing from the contacts.

2. An enclosed protector having a housing formed by a base (10) and a cover, a generally elongated recess (10a) formed in the base and defined by side walls of the base, the recess having opposed first (10b) and second (10c) ends,
a first terminal (14) mounted at one opposed end, the first terminal having a generally flat contact mounting portion (14a) disposed within the recess, the first terminal extending through an opening (100) in a wall of the housing,
a stationary contact (14c) mounted on the mounting portion of the first terminal,
an elongated movable contract arm (18) having first and second ends, a second terminal (16) mounted on the base, an electrically conductive movable contact arm mounting platform (17) electrically connected to the second terminal is disposed at the second end (10c) of the recess, the second end (18b) of the movable contact arm being electrically connected to the platform, a movable contact (18a) mounted on the first end of the movable contact arm and arranged to move into and out of engagement with the stationary contact,
a thermostat metal element (22) positioned in the recess and arranged to move the movable contact arm at preselected thermal conditions and in turn move the movable contact (18a) out of engagement with the stationary contact (14c),
the base formed with a terminal receiving ledge (10h) adjacent the first end (10b) of the recess, an electrically conductive portion (16d) received on the terminal receiving ledge and being electrically connected to the second terminal (16),
the cover (120) received over the base, **characterised by** a side wall on the cover having spaced apart wall portions received on the first terminal closely adjacent to the stationary (14c) and movable (18a) contacts forming a first multiple wall barrier (122) to limit travel of arcing from the contacts, the side wall of the cover having additional spaced apart wall portions along the perimeter of the base (10) at the first end of the recess adjacent to the terminal receiving ledge forming a second multiple wall barrier (124) to limit travel of arcing from the contacts.

3. A protector according to claim 2 in which the wall portions (122a, 122b, 122c) of the first multiple wall barrier (122) are joined to one another to form a hollow triangular wall barrier.

4. A protector according to claim 2 in which an upstanding notch (122d) is formed between two barrier wall portions of the first multiple wall barrier (122) and the side wall (10e) of the base is received in the notch.

5. A protector according to claim 4 in which one side of the notch (122d) is extended in length a distance essentially the same as the thickness of the contact mounting portion of the first terminal (14) and is received adjacent to the contact mounting portion.

6. A protector according to claim 2 further comprising another side wall portion of the cover adjacent to the multiple wall barrier out disposed externally of the first terminal (14).

7. A protector according to claim 2 in which the wall portions of the second multiple barrier (124) walls lie in respective planes which are generally parallel with each other.

8. A protector according to claim 2 in which the housing is formed with openings (3, 4, 5, 6) and further comprising epoxy filling each opening to provide an environmental seal.

## Patentansprüche

1. Umschlossene Schutzvorrichtung, umfassend:
einen Sockel (10), eine im Sockel ausgebildete, im Wesentlichen längliche Ausnehmung (10a), die durch die Seitenwände des Sockels definiert wird, wobei die Ausnehmung entgegengesetzte Enden, ein erstes (10b) und ein zweites (10c), aufweist,
einen ersten Anschluss (14), der einen durch eine Seitenwand des Sockels gebildeten Schlitz (10o) an einem der entgegengesetzten Enden durchdringt, wobei der erste Anschluss einen im Wesentlichen flachen, in der Ausnehmung angeordneten Kontakt-Anbringungs-Bereich (14a) aufweist,
einen unbeweglichen Kontakt (14c), der am Anbringungs-Bereich des ersten Anschlusses angebracht ist,
einen länglichen beweglichen Kontaktarm (18) mit einem ersten und einem zweiten Ende,
einen zweiten Anschluss (16) mit einer Anbringungsplattform (17) am zweiten Ende (10c) der Ausnehmung, wobei das zweite Ende (18b) des beweglichen Kontaktarms an der Anbringungsplattform angebracht ist,
einen beweglichen Kontakt (18a), der am ersten Ende des beweglichen Kontaktarms angebracht ist und angeordnet ist, um sich in und außer Eingriff mit dem unbeweglichen Kontakt zu bewegen,
einen auf dem Sockel aufgenommenen Deckel (120),
**dadurch gekennzeichnet, dass**
der Deckel eine Seitenwand mit einer ersten (122) und einer zweiten (124) mehrfachen Wandbarriere aufweist, wobei die erste Barriere an einem Bereich des ersten Anschlusses (14) ausgerichtet ist und die zweite Barriere beabstandete, parallel erstreckende Wandbereiche entlang des Umfangs des Sockels am ersten Ende der Ausnehmung aufweist, wobei die erste und die zweite Wandbarriere (122, 124) dazu dienen, den Weg eines Lichtbogens von den Kontakten zu beschränken.

2. Umschlossene Schutzvorrichtung mit
einem von einem Sockel (10) und einem Deckel gebildeten Gehäuse, wobei eine im Wesentlichen längliche Ausnehmung (10a) im Sockel ausgebildet ist, die durch die Seitenwände des Sockels definiert wird, wobei die Ausnehmung entgegengesetzte Enden, ein erstes (10b) und ein zweites (10c), aufweist,
einem ersten Anschluss (14), der an einem der entgegengesetzten Enden angebracht ist, wobei der erste Anschluss einen im Wesentlichen flachen, in der Ausnehmung angeordneten Kontakt-Anbringungs-Bereich (14a) aufweist und wobei der erste Anschluss eine Öffnung (100) in einer Wand des Gehäuses durchdringt,
einem unbeweglichen Kontakt (14c), der am Anbringungs-Bereich des ersten Anschlusses angebracht ist,
einem länglichen beweglichen Kontaktarm (18) mit einem ersten und einem zweiten Ende,
einem zweiten Anschluss (16), der am Sockel angebracht ist,
einer elektrisch leitenden Anbringungsplattform (17) für einen beweglichen Kontaktarm, die elektrisch mit dem zweiten Anschluss verbunden und am zweiten Ende (10c) der Ausnehmung angeordnet ist, wobei das zweite Ende (18b) des beweglichen Kontaktarms elektrisch mit der Plattform verbunden ist,
einem beweglichen Kontakt (18a), der an dem ersten Ende des beweglichen Kontaktarms angebracht ist und angeordnet ist, um sich in und außer Eingriff mit dem unbeweglichen Kontakt zu bewegen,
einem Thermostatmetallelement (22) welches in der Ausnehmung positioniert ist und vorgesehen ist, um den beweglichen Kontaktarm bei vorbestimmten thermischen Bedingungen zu bewegen und wiederum den beweglichen Kontakt (18a) außer Eingriff mit dem unbeweglichen Kontakt (14c) zu bewegen,
wobei der Sockel mit einem Anschlussaufnahmevorsprung (10h) benachbart zum ersten Ende (10b) der Ausnehmung gebildet ist und ein elektrisch leitender Bereich (16d) vom Anschlussaufnahmevorsprung aufgenommen und elektrisch mit dem zweiten Anschluss (16) verbunden ist,
der auf dem Sockel aufgenommene Deckel (120) **gekennzeichnet ist durch** eine Seitenwand auf dem Deckel mit beabstandeten Wandbereichen, die an dem ersten Anschluss eng benachbart zu dem unbeweglichen (14c) und beweglichen (18a) Kontakt, aufgenommen sind, welche eine erste mehrfache Wandbarriere (122) bilden, um den Weg eines Lichtbogens von den Kontakten zu beschränken,
wobei die Seitenwand des Deckels zusätzliche beabstandete Wandbereiche entlang des Umfangs des Sockels (10) am ersten Ende der Ausnehmung benachbart zum Anschlussaufnahmevorsprung aufweist, welche eine zweite mehrfache Wandbarriere (124) bilden, um den Weg eines Lichtbogens von den Kontakten zu beschränken.

3. Schutzvorrichtung gemäß Anspruch 2, wobei die Wandbereiche (122a, 122b, 122c) der ersten mehrfachen Wandbarriere (122) verbunden sind, um eine hohle dreieckige Wandbarriere zu bilden.

4. Schutzvorrichtung gemäß Anspruch 2, wobei eine aufrechte Kerbe (122d) zwischen zwei Barrieren-Wandbereichen der ersten mehrfachen Wandbarriere (122) gebildet ist und die Seitenwand (10e) des Sockels in der Kerbe aufgenommen ist.

5. Schutzvorrichtung gemäß Anspruch 4, wobei eine Seite der Kerbe (122d) eine Längenausdehnung aufweist, die im Wesentlichen der Dicke des Kontakt-Anbringungsbereichs des ersten Anschlusses (14) entspricht und benachbart zum Kontakt-Anbringungsbereich aufgenommen ist.

6. Schutzvorrichtung gemäß Anspruch 2, ferner umfassend einen weiteren Wandbereich des Deckels, welcher benachbart zur mehrfachen Wandbarriere aber außerhalb des ersten Anschlusses (14) angeordnet ist.

7. Schutzvorrichtung gemäß Anspruch 2, wobei die Wandbereiche der zweiten mehrfachen Barrierewände (124) jeweils in Ebenen liegen, die im Wesentlichen parallel zueinander sind.

8. Schutzvorrichtung gemäß Anspruch 2, wobei das Gehäuse mit Öffnungen (3, 4, 5, 6) gebildet ist und ferner ein Kunstharz umfasst, welches jede Öffnung füllt und eine Umgebungs-Abdichtung bildet.

## Revendications

1. Dispositif de protection sous coffret comprenant :
une base (10), une cavité (10a) en général allongée, formée dans la base et définie par les parois latérales de la base, la cavité présentant des première (10b) et deuxième (10c) extrémités opposées,
une première borne (14) qui s'étend à travers une fente (10o) formée à travers une paroi latérale de la base au niveau d'une extrémité opposée, la première borne présentant une partie de montage de contact (14a) en général plate disposée à l'intérieur de la cavité,
un contact fixe (14c) monté sur la partie de montage de la première borne,
un bras de contact (18) mobile allongé qui présente des première et deuxième extrémités, une deuxième borne (16) qui présente une plate-forme de montage (17) au niveau de la deuxième extrémité (10c) de la cavité,
la deuxième extrémité (18b) du bras de contact mobile étant montée sur la plate-forme de montage, un contact mobile (18a) étant monté sur la première extrémité du bras de contact mobile et disposé de manière à sortir d'une mise en prise avec le contact fixe,
un couvercle (120) reçu sur la base, **caractérisé en ce que** le couvercle présente une paroi latérale qui présente de premières (122) et deuxièmes (124) barrières de paroi multiples dans lequel la première barrière est alignée avec une partie de la première borne (14) et la deuxième barrière comprend des parties de paroi espacées et qui s'étendent de manière parallèle le long du périmètre de la base au niveau de la première extrémité de la cavité, les premières et deuxièmes barrières de paroi multiples (122, 124) servant à limiter la propagation d'arcs électriques en provenance des contacts.

2. Dispositif de protection sous coffret présentant un logement formé par une base (10) et un couvercle, une cavité (10a) allongée en général, formée dans la base et définie par les parois latérales de la base, la cavité présentant des première (10b) et deuxième (10c) extrémités opposées,
une première borne (14) étant montée au niveau d'une extrémité opposée, la première borne présentant une partie de montage de contact (14a) en général plate disposée à l'intérieur de la cavité, la première borne s'étendant à travers une ouverture (10o) située dans une paroi du logement,
un contact fixe (14c) étant monté sur la partie de montage de la première borne, un bras de contact (18) mobile allongé présentant des première et deuxième extrémités, une deuxième borne (16) étant montée sur la base, une plate-forme de montage de bras de contact mobile (17) conductrice de manière électrique connectée à la deuxième borne est disposée au niveau de la deuxième extrémité (10c) de la cavité, la deuxième extrémité (18b) du bras de contact mobile étant connectée de manière électrique à la plate-forme, un contact mobile (18a) étant monté sur la première extrémité du bras de contact mobile et disposé de manière à venir en prise, et à sortir d'une mise en prise, avec le contact fixe,
un élément métallique de thermostat (22) étant positionné dans la cavité et disposé de manière à déplacer le bras de contact mobile selon des conditions thermiques présélectionnées qui va déplacer à son tour le contact mobile (18a) hors d'une prise avec le contact fixe (14c),
la base étant formée avec un rebord de réception de borne (10h) adjacent à la première extrémité (10b) de la cavité, une partie conductrice de manière électrique (16d) étant reçue sur le rebord de réception de borne et étant connectée de manière électrique à la deuxième borne (16),
le couvercle (120) étant reçu sur la base, **caractérisé par** une paroi latérale sur le couvercle qui présente des parties de paroi espacées reçues sur la première borne immédiatement adjacentes aux contacts fixe (18a) et mobile (14c) en formant une première barrière de paroi multiple (122) de manière à limiter la propagation des arcs électriques en provenance des contacts, la paroi latérale du couvercle présentant des parties de paroi espacées supplémentaires le long du périmètre de la base (10), la première extrémité de la cavité étant adjacente au rebord de réception de borne en formant une deuxième barrière de paroi multiple (124) de manière à limiter la propagation des arcs électriques en provenance des contacts.

3. Dispositif de protection selon la revendication 2, dans lequel les parties de paroi (122a, 122b, 122c) de la première barrière de paroi multiple (122) sont jointes les unes aux autres de façon à former une barrière de paroi triangulaire creuse.

4. Dispositif de protection selon la revendication 2, dans lequel une encoche droite (122d) est formée entre deux parties de paroi de barrière de la première barrière de paroi multiple (122) et la paroi latérale (10e) de la base est reçue dans l'encoche.

5. Dispositif de protection selon la revendication 4, dans lequel le côté de l'encoche (122d) s'étend en longueur sur une distance qui est sensiblement identique à l'épaisseur de la partie de montage de contact de la première borne (14) et est reçu adjacent à la partie de montage de contact.

6. Dispositif de protection selon la revendication 2, comprenant en outre une autre partie de paroi latérale du couvercle adjacente à la barrière de paroi multiple, mais qui est disposée à l'extérieur de la première borne (14).

7. Dispositif de protection selon la revendication 2, dans lequel les partiels de paroi de la deuxième barrière de paroi multiple (124) se situent dans des plans respectifs qui sont en général parallèles les uns aux autres.

8. Dispositif de protection selon la revendication 2, dans lequel le logement est formé avec des ouvertures (3, 4, 5, 6), comprenant en outre un remplissage de chaque ouverture avec de l'époxy de façon à fournir un joint d'étanchéité vis-à-vis de l'environnement.
